# EUROPÄISCHE PATENTSCHRIFT

(11) **EP 3 972 460 B1**
(45) Veröffentlichungstag und Bekanntmachung des Hinweises auf die Patenterteilung: **22.03.2023**
(21) Anmeldenummer: 19727317.0
(22) Anmeldetag: 20.05.2019
(51) Int. Cl.: A47J 31/36

(54) **BRÜHVORRICHTUNG UND VERFAHREN ZUM BETRIEB EINER BRÜHVORRICHTUNG**
BREWING APPARATUS AND METHOD FOR OPERATING A BREWING APPARATUS
DISPOSITIF D'INFUSION ET PROCÉDÉ POUR FAIRE FONCTIONNER UN DISPOSITIF D'INFUSION

(43) Veröffentlichungstag der Anmeldung: 30.03.2022
(73) Patentinhaber: Eugster/Frismag AG, 8580 Amriswil (CH)
(72) Erfinder: RIESSBECK, Wolfgang, 8597 Landschlacht (CH); YESIL, Saadettin, 78462 Konstanz (DE); EGGER, Patrick, 9246 Niederbüren (CH); SCHEURER, Roman, 8200 Schaffhausen (CH)
(74) Vertreter: Loock, Jan Pieter
(86) Internationale Anmeldenummer: PCT/EP2019/062945
(87) Internationale Veröffentlichungsnummer: WO 2020/233783

(56) Entgegenhaltungen:
- EP-B1- 2 485 628

## Beschreibung

### Stand der Technik

Die vorliegende Erfindung betrifft eine Brühvorrichtung zur Herstellung eines Getränkes aus einer Portionskapsel, wobei die Brühvorrichtung ein erstes Brühkammerelement, ein zweites Brühkammerelement und eine Dichtvorrichtung aufweist, wobei das erste Brühkammerelement zwischen einer Ladestellung, in welcher das erste und das zweite Brühkammerelement voneinander beabstandet sind, und einer Arbeitsstellung, in welcher das erste und das zweite Brühkammerelement zur Bildung einer im Wesentlichen geschlossenen Brühkammer einander angenähert sind, entlang einer Zentralachse bewegbar ist, wobei die Dichtvorrichtung in der Arbeitsstellung zwischen dem ersten und dem zweiten Brühkammerelement angeordnet ist, wobei das erste oder zweite Brühkammerelement eine Flüssigkeitszufuhreinrichtung zum Einspritzen von Flüssigkeit in eine in der Brühkammer befindlichen Portionskapsel aufweist und wobei die Flüssigkeitszufuhreinrichtung einen Druckraum aufweist, der zur Brühkammer durch einen entlang der Zentralachse verschiebbaren Gleiter begrenzt ist.

Eine solche Brühvorrichtung ist beispielsweise aus der Druckschrift DE 10 2010 044 945 A1 bekannt. Die Brühvorrichtung ist zum Extrahieren einer Portionskapsel zur Herstellung eines Getränks bestimmt, insbesondere Kaffee. Die Brühvorrichtung umfasst ein zweites Brühkammerelement, welches als glockenförmiger Hohlraum zur Aufnahme einer mit einer Getränkesubstanz gefüllten Portionskapsel ausgebildet ist. Ein erstes als Verschlusselement ausgebildetes Brühkammerelement ist mit einem Kniehebel verbunden und entlang einer axialen Richtung von einer Ladestellung in eine Extraktionsstellung bewegbar. In der Extraktionsstellung verschließt das Verschlusselement den glockenförmigen Hohlraum und bildet eine im Wesentlichen geschlossene Brühkammer. Am Verschlusselement ist eine Injektionsanordnung zum Einleiten einer Extraktionsflüssigkeit in die Portionskapsel angeordnet, welche mit der Getränkesubstanz innerhalb der Portionskapsel wechselwirkt und anschließend von einer am zweiten Brühkammerelement angeordneten Extraktionsanordnung aus der Portionskapsel abgeführt und zur Bereitstellung eines Getränks einem Trinkgefäß zugeführt wird. In der Ladestellung, wobei das Verschlusselement und der glockenförmige Hohlraum beabstandet sind, wird die Brühvorrichtung mit der Portionskapsel beladen. Anschließend wird das Verschlusselement mittels des Kniehebels in die Extraktionsstellung verschoben. Dabei perforieren am Verschlusselement und am glockenförmigen Hohlraum angeordnete Perforationsmittel die Portionskapsel, sodass Öffnungen zur Ein- und Ableitung der Extraktionsflüssigkeit während des Brühvorgangs in der Extraktionsstellung entstehen, wobei ein hoher Extraktionsdruck innerhalb der Brühkammer herrscht. Es ist bekannt, derartige Brühvorrichtungen mittels eines Kniehebelgelenks auszustatten, welche das Verschlusselement von einer Ladestellung in eine Extraktionsstellung verschieben, um eine im Wesentlichen geschlossene Brühkammer zu bilden.

Nachteilig an solchen Brühvorrichtungen ist, dass der während des Brühvorgangs in der Brühkammer herrschende hohe Extraktionsdruck allein vom Kniehebelgelenk aufgefangen werden muss, sodass es nicht möglich ist, eine gegen ein Auslaufen der Extraktionsflüssigkeit abgesicherte, hinreichend dichte, Brühkammer zu garantieren. Die Verwendung eines Kniehebelgelenks, welches derartigen Anforderungen genügt, ist sehr aufwändig und teuer. Es ist daher wünschenswert, eine Brühvorrichtung bereitzustellen, die eine während des Brühvorgangs unter hohem Extraktionsdruck stehende Brühkammer in einem derart geschlossenen Zustand hält und somit gegen ein Auslaufen der Extraktionsflüssigkeit absichert, dass dabei die gesamte Kraft auf Grund des hohen Extraktionsdrucks in der Brühkammer nicht allein von einem Kniehebelgelenk kompensiert werden muss. Darüber hinaus ist es wünschenswert eine Brühvorrichtung zur Verfügung zu stellen, die eine hohe Abdichtung der Brühkammer bei gleichzeitig geringen Herstellungs- und Materialkosten aufweist.

Die Druckschrift WO 2008 / 037 642 A1 löst dieses Problem, indem zeitlich nach dem mechanischen Schließen der Brühkammer eine Druckkammer mit der unter Druck stehenden Extraktionsflüssigkeit gefüllt wird und durch den Druckanstieg in der Druckkammer eine Erhöhung der Dichtwirkung einer zwischen dem Brühkammerelement und dem Portionskapselflansch angeordneten Dichtung erzielt wird, während das Getränk in der Brühkammer erzeugt wird. Die Extraktionsflüssigkeit gelangt. Nachteilig an dieser Lösung ist, dass der Aufbau der Brühkammer einerseits vergleichsweise aufwändig und somit kostenintensiv ist und dass andererseits die Extraktionsflüssigkeit stets auch sofort in die Brühkammer eingespritzt wird, wodurch in der Brühkammer eine Gegenkraft erzeugt wird, welcher der von der Druckkammer in Richtung der Dichtung ausgehenden Kraft entgegenwirkt und somit zumindest teilweise kompensiert.

Aus der Druckschrift EP 2 485 628 B1 ist eine andere Brühvorrichtung bekannt, bei welcher die Extraktionsflüssigkeit aber zunächst nur in eine Druckkammer geleitet wird, damit der hydraulische Druckaufbau einen beweglichen Kolben des Brühkammerelements in Richtung des gegenüberliegenden Brühkammerelements drückt und somit die Brühkammer abgedichtet wird. Die Druckkammer steht zudem in Fluidverbindung mit einem Heizelement und einem externen Ventil, welches wiederum mit der Brühkammer verbunden ist. Erst wenn ein vorbestimmter Druck erreicht ist, öffnet das externe Ventil und leitet die Extraktionsflüssigkeit durch das Heizelement in Richtung der Brühkammer. Bei dieser Lösung treten die vorstehend genannten Probleme zwar nicht auf, aber dafür ist diese Lösung vergleichsweise aufwändig, teuer, fehleranfällig und platzintensiv, beispielsweise weil die Zuführung für die Extraktionsflüssigkeit mehrfach in den Brühkammerkolben geführt und zur Einbindung des externen Ventils und Heizelement zwischenzeitlich wieder aus dem Brühkammerkolben vollständig herausgeführt werden muss.

### Offenbarung der Erfindung

Der Erfindung liegt daher die Aufgabe zu Grunde, eine Brühvorrichtung und ein Verfahren zum Betrieb einer Brühvorrichtung bereitzustellen, welche die im Zusammenhang mit dem Stand der Technik erörterten Nachteile nicht aufweist und insbesondere eine besonders kompakte, kostengünstige und einfache Implementierung eines der Brühkammer vorgelagerten Druckraums mit Druckentlastungseinrichtung ermöglicht.

Diese Aufgabe wird erfindungsgemäß gelöst durch eine Brühvorrichtung zur Herstellung eines Getränkes aus einer Portionskapsel, wobei die Brühvorrichtung ein erstes Brühkammerelement, ein zweites Brühkammerelement und eine Dichtvorrichtung aufweist, wobei das erste Brühkammerelement zwischen einer Ladestellung, in welcher das erste und das zweite Brühkammerelement voneinander beabstandet sind, und einer Arbeitsstellung, in welcher das erste und das zweite Brühkammerelement zur Bildung einer im Wesentlichen geschlossenen Brühkammer einander angenähert sind, entlang einer Zentralachse bewegbar ist, wobei die Dichtvorrichtung in der Arbeitsstellung zwischen dem ersten und dem zweiten Brühkammerelement angeordnet ist, wobei das erste oder zweite Brühkammerelement eine Flüssigkeitszufuhreinrichtung zum Einspritzen von Flüssigkeit in eine in der Brühkammer befindlichen Portionskapsel aufweist, wobei die Flüssigkeitszufuhreinrichtung einen Druckraum aufweist, der zur Brühkammer durch einen entlang der Zentralachse verschiebbaren Gleiter begrenzt ist, wobei der Gleiter auf einer der Brühkammer zugewandten Seite die Dichtvorrichtung und auf einer dem Druckraum zugewandten Seite ein Dichtelement mit integrierter Druckentlastungseinrichtung aufweist.

Die erfindungsgemäße Brühvorrichtung hat gegenüber dem Stand der Technik den Vorteil, dass der Gleiter mit Dichtelement zwei Funktionen, also sowohl die Realisierung der Druckkammer zur Verbesserung der Dichtwirkung der Dichtvorrichtung durch hydraulischen Druckaufbau als auch die Druckentlastungseinrichtung zum Einspritzen der Flüssigkeit in die Brühkammer erst nachdem ein vorbestimmter Druckschwellwert in der Druckkammer erreicht ist, in sich vereint und somit eine sehr kompakten Brühkammeraufbau mit deutlich verbesserter Abdichtung ermöglicht. Der vergleichsweise einfache Aufbau ermöglicht zudem eine kostengünstige Implementierung und eine zuverlässige Funktionsweise. Insbesondere sind keine separaten Komponenten erforderlich und die Zuführung der Extraktionsflüssigkeit muss nicht aus dem beweglichen Brühkammerelement wieder herausgeführt werden. Zudem muss die Schließkraft zur Erzielung und Aufrechterhaltung der gewünschten Abdichtung auch bei hohen Extraktionsdrücken nicht durch den mechanischen Schließmechanismus der Brühkammer, welcher manuell oder motorisch angetrieben ausgebildet sein kann, herbeigeführt werden. Der erste und/oder zweite Brühkammerelement ist/sind vorzugsweise linear zwischen der Ladestellung und der Arbeitsstellung verschiebbar. Denkbar ist, dass das erste Brühkammerelement eine insbesondere feststehende glockenförmige Aufnahme für die Portionskapsel umfasst, während das zweite Brühkammerelement ein zwischen der Ladestellung und der Arbeitsstellung linear entlang der Zentralachse verschiebbares Verschlusselement umfasst, in welches die Flüssigkeitszuführeinrichtung und der Gleiter mit Dichtelement und Druckentlastungseinrichtung integriert sind. Beim Befüllen der Brühvorrichtung wird die Portionskapsel in der Ladestellung vorzugsweise entlang einer senkrecht zur Zentralachse ausgerichteten Beladerichtung zwischen das erste und das zweite Brühkammerelement eingeführt und beim Schließen der Brühkammer von dem zweiten Brühkammerelement in Richtung des ersten Brühkammerelements mitbewegt, so dass die Portionskapsel in die Aufnahme geschoben wird. Alternativ ist denkbar, dass das als Aufnahmeelement ausgebildete erste Brühkammerelement zur Bestückung mit einer Portionskapsel aus der Brühvorrichtung manuell herausnehmbar, so dass nach dem Wiedereinsetzen des mit einer neuen Portionskapsel bestückten ersten Brühkammerelements das zweite Brühkammerelement nur noch von der Ladestellung in die Arbeitsstellung verfahren wird. Bei der Flüssigkeit handelt es sich insbesondere um heißes und unter Druck befindliches Wasser zum Aufbrühen von in der Portionskapsel enthaltener Getränkerohsubstanz, insbesondere geröstete Kaffeebohnenpartikel, Instantkaffeepulver, Teeverschnitt, Schokoladen- und Kakaopulver, Milchpulver und dergleichen.

Vorteilhafte Ausgestaltungen und Weiterbildungen der Erfindung sind den Unteransprüchen, sowie der Beschreibung unter Bezugnahme auf die Zeichnungen entnehmbar.

Gemäß einer bevorzugten Ausführungsform der vorliegenden Erfindung ist vorgesehen, dass das Dichtelement konzentrisch und rotationssymmetrisch zur Zentralachse ausgebildet ist. Die Brühkammer ist vorzugsweise rotationssymmetrisch um die Zentralachse ausgebildet, um die insbesondere rotationssymmetrisch ausgebildete Portionskapsel formschlüssig aufzunehmen. Das Dichtelement kann somit eine umlaufende und vollständige Abdichtung der Brühkammer in der Arbeitsstellung gewährleisten. Insbesondere ist die Dichtvorrichtung eine Dichtung, die in der Arbeitsstellung auf einen umlaufenden Flansch, welcher mit einer Deckelfolie bedeckt sein kann, gedrückt wird.

Gemäß einer weiteren bevorzugten Ausführungsform der vorliegenden Erfindung ist vorgesehen, dass das erste oder zweite Brühkammerelement ein Kolbengehäuse aufweist, in welchem der Gleiter entlang der Zentralachse verschiebbar gelagert ist, wobei das Dichtelement eine dynamische äußere Dichtung zur Abdichtung des Gleiters gegenüber einer sich zumindest bereichsweise parallel zur Zentralachse erstreckenden Innenwandung des Kolbengehäuses aufweist. Vorzugsweise umfasst die dynamische äußere Dichtung eine umlaufende äußere Dichtlippe, deren freies Ende durch Druck im Druckraum in Richtung der Innenwandung des Kolbengehäuses gedrückt wird. In vorteilhafter Weise sorgt der Druckanstieg im Druckraum somit nicht nur für eine Verbesserung der Dichtwirkung der Dichtvorrichtung sondern gleichzeitig auch für eine verbesserte Abdichtung zwischen dem Gleiter und dem Kolbengehäuse, indem der Druckanstieg im Druckraum zu einem Anpressen der äußeren Dichtlippe an die Innenwandung des Kolbengehäuses sorgt, so dass kein Druckverlust in der Druckkammer durch den Spalt zwischen Gleiter und Innenwandung auftreten kann.

Gemäß einer weiteren bevorzugten Ausführungsform der vorliegenden Erfindung ist vorgesehen, dass das Kolbengehäuse eine sich zumindest bereichsweise senkrecht zur Zentralachse erstreckende Rückwand aufweist, welche eine dem Gleiter gegenüberliegenden Wandung des Druckraums bildet. Vorzugsweise umfasst die Druckentlastungseinrichtung eine umlaufende innere Dichtlippe, deren freies Ende in seiner Ausgangsposition gegen die Rückwand drückt und bei Überschreiten eines Druckschwellwertes im Druckraum in eine von der Rückwand beabstandete Freigabeposition gedrückt wird. Vorzugsweise weist die Flüssigkeitszufuhreinrichtung einen Flüssigkeitszulauf, der in die Druckraum mündet, und einen Flüssigkeitsablauf, der in die Brühkammer mündet, auf, wobei der Flüssigkeitsablauf nur in Fluidverbindung mit dem Flüssigkeitszulauf steht, wenn die innere Dichtlippe in der Freigabeposition befindlich ist. Die innere umlaufende Dichtlippe fungiert als Druckentlastungseinrichtung, indem sie bei Erreichen eines vorbestimmten Druckes im Druckraum von der Rückwand weggedrückt wird und somit den Zulauf zur Brühkammer freigibt. Auf diese Weise wird sichergestellt, dass die Flüssigkeit erst in die Brühkammer gelangt, wenn die Dichtwirkung der Dichtvorrichtung ausreichend hoch ist.

Gemäß einer weiteren bevorzugten Ausführungsform der vorliegenden Erfindung ist vorgesehen, dass das Dichtelement auf seiner der Rückwand zugewandten Seite einen im Wesentlichen senkrecht zur Zentralachse verlaufenden Verbindungsbereich aufweist, der sich von der inneren Dichtlippe zur äußeren Dichtlippe erstreckt und der einen dem Gleiter zugewandte Befestigungseinrichtung umfasst. Vorteilhafterweise können somit innere Dichtlippe und äußere Dichtlippe in Form des einstückigen Dichtelements realisiert werden, so dass eine besonders kostengünstige Implementierung und Montage der Brühvorrichtung ermöglicht wird. Zudem ist der gesamte Gleiter vergleichsweise kompakt ausgebildet, so dass die Erstreckung der Brühvorrichtung insbesondere entlang der Zentralachse durch die Implementierung von Druckkammer und Gleiter kaum größer als bei eine konventionellen Brühvorrichtung ohne Druckkammer ist.

Gemäß einer weiteren bevorzugten Ausführungsform der vorliegenden Erfindung ist vorgesehen, dass der Gleiter auf seiner der Rückwand zugewandten Seiten einen zentralen Vorsprung aufweist, der in einer korrespondierenden Führung am Kolbengehäuse, die zentral an der Rückwand ausgebildet ist, axial verschiebbar gelagert ist. Vorteilhafterweise wird der Gleiter durch seinen in der Führung der Rückwand gleitend gelagerten Vorsprung entlang seiner zur Zentralachse parallelen Bewegung geführt und gestützt.

Gemäß einer weiteren bevorzugten Ausführungsform der vorliegenden Erfindung ist vorgesehen, dass der Flüssigkeitszulauf über eine Pumpe und/oder einem Thermoelement in Fluidverbindung mit einem Flüssigkeitsreservoir steht. Die Pumpe zum unter Druck setzen der Flüssigkeit und/oder das Thermoelement zum Aufheizen der Flüssigkeit liegen in Fließrichtung der Flüssigkeit insbesondere vor dem Druckraum.

Ein weiterer Gegenstand der vorliegenden Erfindung ist ein Verfahren zum Betrieb der erfindungsgemäßen Brühvorrichtung, wobei in einem ersten Verfahrensschritt eine Portionskapsel zwischen dem ersten und dem zweiten Brühkammerelement bereitgestellt wird und wobei in einem nachfolgenden zweiten Verfahrensschritt das erste oder zweite Brühkammerelement von der Ladestellung in die Arbeitsstellung bewegt wird und wobei in einem dritten Verfahrensschritt Flüssigkeit in den Druckraum eingeströmt wird, wodurch der Druckanstieg im Druckraum im ersten Teilschritt zunächst ein Verschieben des Gleiters entlang der Zentralachse in Richtung der Brühkammer zur Herbeiführung der Dichtwirkung des Dichtvorrichtung bewirkt und im zweiten Teilschritt beim Erreichen eines vorbestimmten Druckschwellwertes im Druckraum anschließend die Druckentlastungseinrichtung aktiviert, wodurch die Flüssigkeit in die Brühkammer eingespritzt wird. Die Bereitstellung der Portionskapsel im ersten Verfahrensschritt kann insbesondere entweder dadurch erfolgen, dass das erste und/oder zweite Brühkammerelement mit der Portionskapsel bestückt und sodann in der Brühvorrichtung angeordnet wird, oder dass die Portionskapsel unmittelbar in den Raum zwischen dem ersten und dem zweiten Brühkammerelement angeordnet wird.

Gemäß einer bevorzugten Ausführungsform der vorliegenden Erfindung ist vorgesehen, dass während des dritten Verfahrensschrittes durch den Druck im Druckraum ein freies Ende einer umlaufenden äußeren Dichtlippe des Dichtelements gegen die Innenwandung eines Kolbengehäuses des ersten oder zweiten Brühkammerelements gedrückt wird.

Gemäß einer weiteren bevorzugten Ausführungsform der vorliegenden Erfindung ist vorgesehen, dass während des dritten Verfahrensschrittes durch den Druck im Druckraum die Dichtvorrichtung gegen einen Flansch der Portionskapsel oder gegen das zweite oder erste Brühkammerelement gedrückt wird.

Gemäß einer weiteren bevorzugten Ausführungsform der vorliegenden Erfindung ist vorgesehen, dass während des ersten Teilschrittes der Druckraum gegen einen in die Brühkammer mündenden Flüssigkeitsablauf durch eine umlaufende innere Dichtlippe der Druckentlastungseinrichtung abgedichtet wird.

Gemäß einer weiteren bevorzugten Ausführungsform der vorliegenden Erfindung ist vorgesehen, dass während des zweiten Teilschrittes die umlaufende innere Dichtlippe durch den Druck im Druckraum von einer Rückwand des Kolbengehäuses beabstandet wird, um den Flüssigkeitsablauf in Fluidverbindung mit den Druckraum zu bringen.

Die Erfindung wird nachfolgend anhand von in Zeichnungen dargestellten Ausführungsbeispielen näher erläutert. Die Zeichnungen illustrieren lediglich beispielhafte Ausführungsformen der Erfindung, welche den wesentlichen Erfindungsgedanken nicht einschränken.

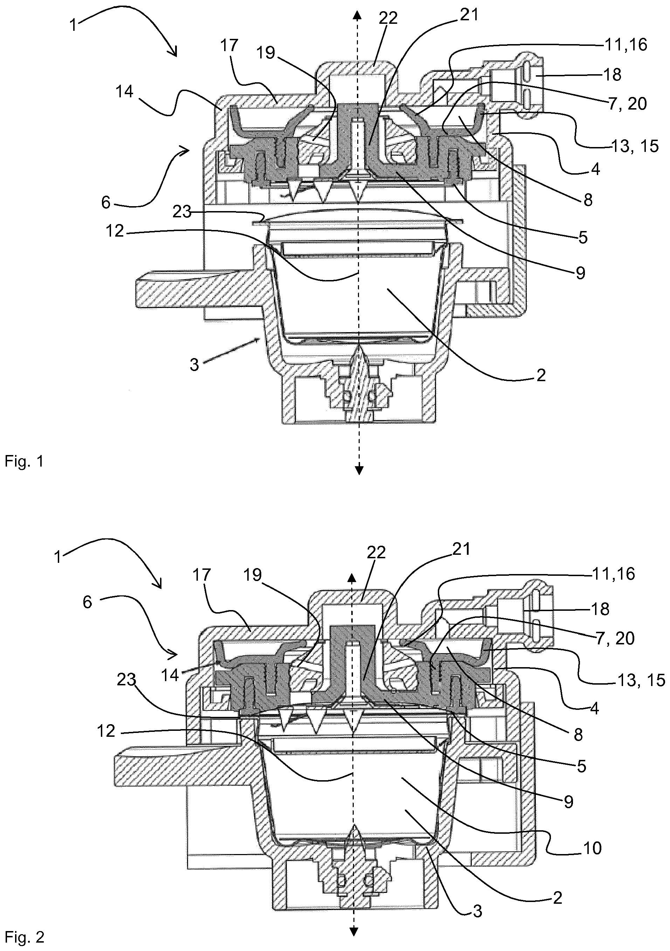

- **Figuren 1 bis 5**: zeigen schematische Schnittbildansichten einer Brühvorrichtung gemäß einer beispielhaften Ausführungsform der vorliegenden Erfindung.

In den verschiedenen Figuren sind gleiche Teile stets mit den gleichen Bezugszeichen versehen und werden daher in der Regel auch jeweils nur einmal benannt bzw. erwähnt.

In **Figur 1** ist die erfindungsgemäße Brühvorrichtung 1 zur Herstellung eines Getränks aus einer Portionskapsel 2 in einer Ausgangssituation dargestellt.

Die Brühvorrichtung 1 umfasst dabei ein erstes Brühkammerelement 3 und ein zweites Brühkammerelement 4. Das erste Brühkammerelement 3 ist als glockenförmiges Aufnahmeelement ausgebildet, in welches die Portionskapsel 2 formschlüssig aufgenommen ist. Der Boden der Portionskapsel 2 liegt dabei auf dem Boden das Aufnahmeelements auf, während ein umlaufender Kapselflansch 23, an dessen Oberseite die Portionskapsel 2 mit einer Deckelfolie verschlossen ist, auf einem Randvorsprung des ersten Brühkammerelements 3 aufliegt.

Das zweite Brühkammerelement 4 ist als Verschlusselement für das Aufnahmeelement ausgebildet. Das zweite Brühkammerelement 4 ist gegenüber dem ersten Brühkammerelement 3 entlang einer mittig durch das erste und das zweite Brühkammerelement 3, 4 verlaufende Zentralachse 12 zwischen einer Arbeitsstellung und einer Ladestellung linear verschiebbar. In Figur 1 befindet sich das zweite Brühkammerelement 4 in der Ladestellung, in welcher das zweite Brühkammerelement 4 von dem ersten Brühkammerelement 3 beabstandet ist, so dass das erste Brühkammerelement 3 in die Brühvorrichtung 1 manuell eingesetzt werden kann (oder alternativ eine Portionskapsel 2 zwischen dem ersten und dem zweiten Brühkammerelement 3, 4 händisch durch einen Benutzer angeordnet werden kann). In den Figuren 2 bis 5 befindet sich das zweite Brühkammerelement 4 jeweils in der Arbeitsstellung, in welcher das zweite Brühkammerelement 4 derart dem zweiten Brühkammerelement 4 angenähert ist, dass der Kapselflansch 23 zwischen dem Randvorsprung des ersten Brühkammerelements 3 und einer am zweiten Brühkammerelement 4 ausgebildeten Dichtvorrichtung 5 eingeklemmt ist. Das erste und das zweite Brühkammerelement 3, 4 bilden in der Arbeitsstellung eine hermetisch dichte Brühkammer 10, in welcher sich die Portionskapsel 2 befindet.

Beim Überführen des zweiten Brühkammerelements 4 von der Ladestellung in die Arbeitsstellung wird die Portionskapsel 2 somit in das Aufnahmeelement formschlüssig eingeschoben. Das Aufnahmeelement weist an seinem Boden einen zentralen Aufstechdorn auf, welcher den Boden der Portionskapsel 2 durchsticht, sobald das zweite Brühkammerelement 4 von der Ladestellung in die Arbeitsstellung verfahren wird. Analog weist das zweite Brühkammerelement 4 an seiner der Portionskapsel 2 zugewandten Seite mehrerer Perforationsspitzen auf, welche die Deckelfolie der Portionskapsel 2 perforieren, sobald das zweite Brühkammerelement 4 von der Ladestellung in die Arbeitsstellung verfahren wird. Das zweite Brühkammerelement 4 weist eine Flüssigkeitszuführeinrichtung 6 auf, durch welche Flüssigkeit, insbesondere heißes Wasser, unter Druck in die Brühkammer 10 eingespritzt wird. Die Flüssigkeit gelangt hierbei durch die mittels der Perforationsspitzen in der Deckelfolie erzeugten Perforationsöffnungen in das Innere der Portionskapsel 2 und kann dort mit der innerhalb der Portionskapsel 2 angeordneten Getränkerohsubstanz wechselwirken, um das gewünschte Getränk zu erzeugen, welches sodann durch die mittels des Aufstechdorns im Boden der Portionskapsel 2 erzeugten Öffnung die Portionskapsel 2 und die Brühkammer 10 verlassen kann und zu einer Getränkeentnahmestelle geleitet wird.

Das zweite Brühkammerelement 4 weist ein Kolbengehäuse 14 auf, in welchem ein Gleiter 9 parallel und antiparallel zur Zentralachse 12 linear verschiebbar relativ zum Kolbengehäuse 14 angeordnet ist. Die dem ersten Brühkammerelement 3 zugewandte Seite des Gleiters 9 fungiert als das eigentliche Verschlusselement zur Bildung der Brühkammer 10, welches in der Arbeitsstellung mit der Deckelfolie in Anlage gelangt. An dieser Seite des Gleiters 9 sind zudem die Dichtvorrichtung 5 in Form einer um die Zentralachse 12 konzentrisch umlaufende Ringdichtung sowie die Perforationsspitzen befestigt.

Auf einer der Brühkammer 10 abgewandten Seite weist das zweite Brühkammerelement 4 einen als Teil der Flüssigkeitszuführeinrichtung 6 ausgebildeten Druckraum 8 auf, welcher zwischen dem Gleiter 9 und einer Rückwand 17 des Kolbengehäuses 14 ausgebildet ist. Die Rückwand 17 erstreckt sich zumindest bereichsweise senkrecht zur Zentralachse 12. Der Druckraum 8 ist insbesondere als konzentrisch um die Zentralachse 12 umlaufenden Ringraum ausgebildet.

Die Flüssigkeitszufuhreinrichtung 6 weist ferner einen Flüssigkeitszulauf 18, der in die Druckraum 8 mündet, auf. Der Flüssigkeitszulauf 18 steht in direkter Fluidverbindung mit einer Pumpe und einem Thermoelement. Die Pumpe fördert Flüssigkeit von einem Flüssigkeitsreservoir zur Flüssigkeitszuführeinrichtung 6. Die Flüssigkeit wird dabei durch das Thermoelement gefördert und hierdurch geheizt. Ferner weist die Flüssigkeitszuführung 6 einen Flüssigkeitsablauf 19 auf, der in die Brühkammer 10 mündet.

Auf einer der Rückwand 17 zugewandten Seite des Gleiters 9 weist der Gleiter 9 ein Dichtelement 7 auf. Das Dichtelement 7 ist dabei als einstückiges, ringförmiges Dichtelement 7 ausgebildet, welches sich ebenfalls konzentrisch und rotationssymmetrisch um die Zentralachse 12 erstreckt. Dabei weist das Dichtelement 7 eine umlaufende innere Dichtlippe 16, eine umlaufende äußere Dichtlippe 15 sowie einen umlaufenden und in radialer Richtung die innere und die äußere Dichtlippe 15, 16 miteinander verbindenden Verbindungsbereich 20 auf. Das Dichtelement 7 ist insbesondere als einstückiges Gummiringteil oder gummiartiges Ringteil ausgebildet. Die äußere Dichtlippe 15 liegt mit ihrem umlaufenden freien Ende an einer Innenwandung des Kolbengehäuses 14 an. Die äußere Dichtlippe 15 bildet somit eine äußere Dichtung 13, welche verhindert, dass Flüssigkeit vom Druckraum 8 in den umlaufenden Schlitz zwischen Gleiter 9 und Innenwandung des Kolbengehäuses 14 gelangt. Die äußere Dichtung 13 fungiert dabei als hydraulische Dichtung, indem sie durch einen Druckaufbau im Druckraum 8 aufgrund von in den Druckraum 8 unter Druck einströmender Flüssigkeit gegen die Innenwandung gedrückt wird. Je größer der Druck im Druckraum 8 ist, desto größer wird die Dichtwirkung der äußeren Dichtung 13.

Gleichzeitig sorgt ein Druckaufbau im Druckraum 8 dazu, dass sich der Gleiter 9 entlang der Zentralachse 12 in Richtung Brühkammer 10 gedrückt wird. Durch diese hydraulische Druckbeaufschlagung des Gleiters 9 wird auch die Dichtwirkung der Dichtvorrichtung 5 gesteigert, weil sie mit zunehmendem Druck im Druckraum 8 immer stärker gegen den Flansch 23 der Portionskapsel 2 gedrückt wird.

Die innere Dichtlippe 14 liegt mit ihrem umlaufenden freien Ende in der in Figuren 1 bis 4 illustrierten Ausgangsposition an der Rückwand 17 des Kolbengehäuses 14 an. Die innere Dichtlippe 14 blockiert damit eine direkte Fluidverbindung zwischen dem Druckraum 8 und dem Flüssigkeitszulauf 18, so dass mittels der Pumpe in den Druckraum 8 geförderte Flüssigkeit den Druckraum 8 zunächst nicht verlassen kann und dort zu einem Druckanstieg führt, der zugleich die Dichtwirkung der Dichtvorrichtung 5 und der äußeren Dichtung 13 erhöht.

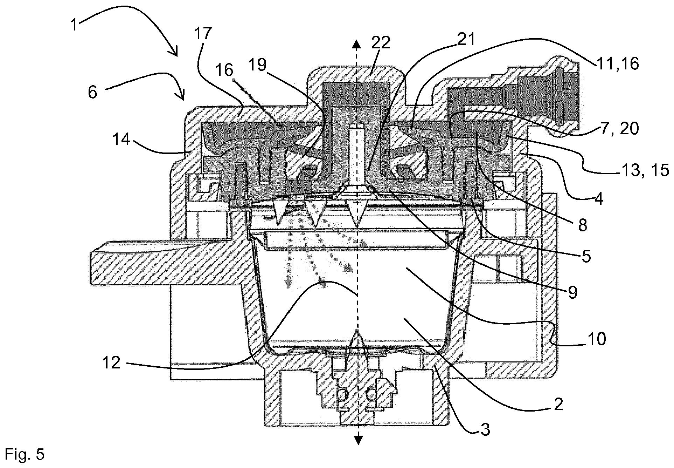

Wenn der Druck in der Druckkammer 8 einen Druckschwellwert, welcher von der mechanischen Steifigkeit bzw. Flexibilität der inneren Dichtlippe 14 abhängt, überschreitet, wird die innere Dichtlippe 16 von dieser Ausgangsposition in die in Figur 5 illustrierte Freigabeposition gedrückt, in welcher sie von der Rückwand 17 beabstandet ist. Hiedurch wird die Fluidverbindung zwischen dem Druckraum 8 und der Brühkammer 10 freigegeben, so dass die Flüssigkeit in die Brühkammer 10 und somit in die Portionskapsel 2 zur Herstellung des Getränks gefördert wird. Die innere Dichtlippe 16 bildet also eine Druckentlastungseinrichtung 11, die aufgrund der einstückigen Ausgestaltung des Druckelements 7 in das Druckelement 7 integriert ist.

Um die Verschiebung des Gleiters 9 entlang der Zentralachse 12 zu führen, weist der Gleiter 12 an seiner der Brühkammer 10 abgewandten Seite einen zentralen zylinderförmigen Vorsprung 21 auf. Der Vorsprung 21 ist in einer korrespondierenden zylinderförmigen Führung, die zentral an der Rückwand 17 des Kolbengehäuses 14 angeordnet ist, längsverschiebbar geführt.

Die Funktionsweise der erfindungsgemäße Brühvorrichtung 1 ist die Folgende:
Nachdem die Brühvorrichtung 1 mit einer neuen Portionskapsel 2 beladen wurde und/oder das mit einer neuen Portionskapsel 2 beladene erste Brühkammerelement 3 in die Brühvorrichtung 1 eingesetzt (oder geschwenkt) wurde (Vgl. Figur 1), wird die Brühkammer 10 geschlossen, indem das zweite Brühkammerelement 4 von der Ladestellung in die Arbeitsstellung verfahren wird (Vgl. Figur 2), wodurch die Deckelfolie und der Kapselboden perforiert werden und die Dichtvorrichtung 5 bereits in Dichteingriff mit dem Kapselflansch 23 gelangt.

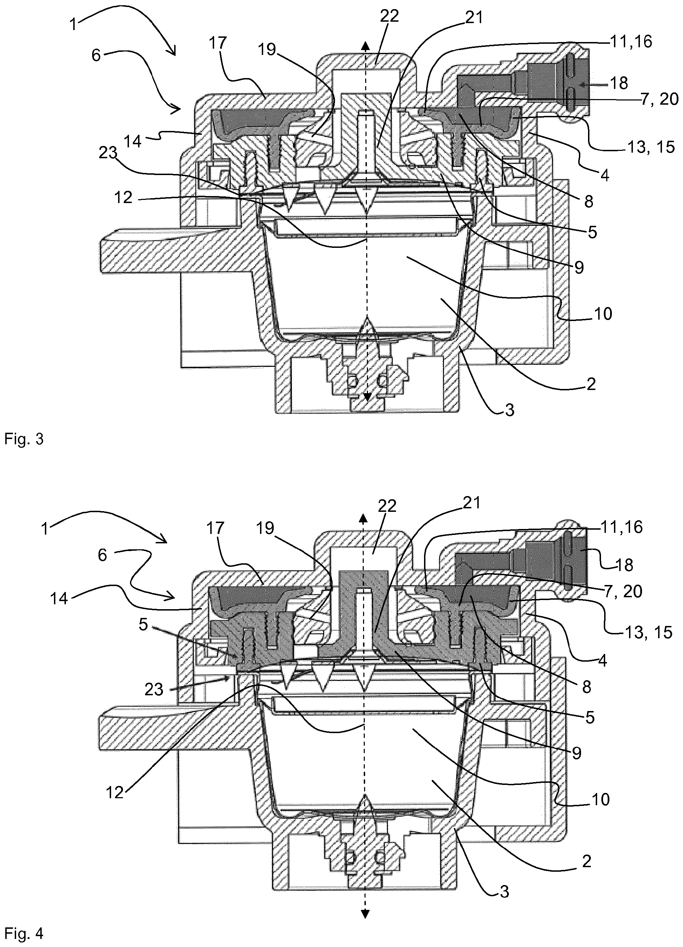

Anschließend wird die Pumpe aktiviert, wodurch mittels des Thermoelements geheizte Flüssigkeit aus dem Flüssigkeitsreservoir durch den Flüssigkeitszulauf 18 in den Druckraum 8 gefördert wird (Vgl. Figur 3. Die innere Dichtlippe 16 befindet sich zu diesem Zeitpunkt nicht in ihrer Ausgangsposition und blockiert somit die Fluidverbindung zur Brühkammer 10. Die Flüssigkeit wird also nur in den Druckraum 8 gefördert, so dass der Druck im Druckraum 8 stetig steigt. Hierdurch wird der Gleiter 9 in Richtung Brühkammer 10 verschoben, wodurch sich die Dichtwirkung der Dichtvorrichtung 5 steigert (Vgl. Figur 4). Zudem wird die äußere Dichtlippe 15 gegen die Innenwandung gedrückt, so dass auch die Dichtwirkung der äußeren Dichtung 13 steigert.

Wenn der Druck im Druckraum 15 so weit gestiegen ist, dass der Druckschwellwert erreicht ist, wird die innere Dichtlippe 16 in ihre Freigabeposition gedrückt, wodurch die Fluidverbindung zur Brühkammer 10 freigegeben ist (Vgl. Figur 5). Die Flüssigkeit kann erst jetzt vom Druckraum 8 bzw. von der Pumpe durch den Flüssigkeitsablauf 19 in die Portionskapsel 2 einfließen, wodurch das herzustellende Getränk erzeugt wird.

### Bezugszeichenliste

- 1: Brühvorrichtung
- 2: Portionskapsel
- 3: Erstes Brühkammerelement
- 4: Zweites Brühkammerelement
- 5: Dichtvorrichtung
- 6: Flüssigkeitszufuhreinrichtung
- 7: Dichtelement
- 8: Druckraum
- 9: Gleiter
- 10: Brühkammer
- 11: Druckentlastungseinrichtung
- 12: Zentralachse
- 13: äußere Dichtung
- 14: Kolbengehäuse
- 15: Äußere Dichtlippe
- 16: Innere Dichtlippe
- 17: Rückwand
- 18: Flüssigkeitszulauf
- 19: Flüssigkeitsablauf
- 20: Verbindungsbereich
- 21: Vorsprung
- 22: Führung
- 23: Kapselflansch

## Patentansprüche

1. Brühvorrichtung (1) zur Herstellung eines Getränkes aus einer Portionskapsel (2), wobei die Brühvorrichtung (1) ein erstes Brühkammerelement (3), ein zweites Brühkammerelement (4) und eine Dichtvorrichtung (5) aufweist, wobei das erste Brühkammerelement (3) zwischen einer Ladestellung, in welcher das erste und das zweite Brühkammerelement (3, 4) voneinander beabstandet sind, und einer Arbeitsstellung, in welcher das erste und das zweite Brühkammerelement (3, 4) zur Bildung einer im Wesentlichen geschlossenen Brühkammer (10) einander angenähert sind, entlang einer Zentralachse (12) bewegbar ist, wobei die Dichtvorrichtung (5) in der Arbeitsstellung zwischen dem ersten und dem zweiten Brühkammerelement (3, 4) angeordnet ist, wobei das erste oder zweite Brühkammerelement (3, 4) eine Flüssigkeitszufuhreinrichtung (6) zum Einspritzen von Flüssigkeit in eine in der Brühkammer (10) befindlichen Portionskapsel (2) aufweist, wobei die Flüssigkeitszufuhreinrichtung (6) einen Druckraum (8) aufweist, der zur Brühkammer (10) durch einen entlang der Zentralachse (12) verschiebbaren Gleiter (9) begrenzt ist, **dadurch gekennzeichnet, dass** der Gleiter (9) auf einer der Brühkammer (10) zugewandten Seite die Dichtvorrichtung (5) und auf einer dem Druckraum (8) zugewandten Seite ein Dichtelement (7) mit integrierter Druckentlastungseinrichtung (11) aufweist.

2. Brühvorrichtung (1) nach Anspruch 1, wobei das Dichtelement (7) konzentrisch und rotationssymmetrisch zur Zentralachse (12) ausgebildet ist.

3. Brühvorrichtung (1) nach einem der vorhergehenden Ansprüche, wobei das erste oder zweite Brühkammerelement (3, 4) ein Kolbengehäuse (14) aufweist, in welchem der Gleiter (9) entlang der Zentralachse (12) verschiebbar gelagert ist, wobei das Dichtelement (7) eine dynamische äußere Dichtung (13) zur Abdichtung des Gleiters (9) gegenüber einer sich zumindest bereichsweise parallel zur Zentralachse (12) erstreckenden Innenwandung des Kolbengehäuses (14) aufweist.

4. Brühvorrichtung (1) nach Anspruch 3, wobei die dynamische äußere Dichtung (13) eine umlaufende äußere Dichtlippe (15) umfasst, deren freies Ende durch Druck im Druckraum (8) in Richtung der Innenwandung des Kolbengehäuses (14) gedrückt wird.

5. Brühvorrichtung (1) nach einem der vorhergehenden Ansprüche, wobei das Kolbengehäuse (14) eine sich zumindest bereichsweise senkrecht zur Zentralachse (12) erstreckende Rückwand (17) aufweist, welche eine dem Gleiter (9) gegenüberliegenden Wandung des Druckraums (8) bildet.

6. Brühvorrichtung (1) nach Anspruch 5, wobei die Druckentlastungseinrichtung (11) eine umlaufende innere Dichtlippe (16) umfasst, deren freies Ende in seiner Ausgangsposition gegen die Rückwand (17) drückt und bei Überschreiten eines Druckschwellwertes im Druckraum (8) in eine von der Rückwand (17) beabstandete Freigabeposition gedrückt wird

7. Brühvorrichtung (1) nach Anspruch 6, wobei Flüssigkeitszufuhreinrichtung (6) einen Flüssigkeitszulauf (18), der in die Druckraum (8) mündet, und einen Flüssigkeitsablauf (19), der in die Brühkammer (10) mündet, aufweist, wobei der Flüssigkeitsablauf (19) nur in Fluidverbindung mit dem Flüssigkeitszulauf (18) steht, wenn die innere Dichtlippe (16) in der Freigabeposition befindlich ist.

8. Brühvorrichtung (1) nach einem der vorhergehenden Ansprüche, wobei das Dichtelement (7) auf seiner der Rückwand (17) zugewandten Seite einen im wesentlichen senkrecht zur Zentralachse (12) verlaufenden Verbindungsbereich (20) aufweist, der sich von der inneren Dichtlippe (16) zur äußeren Dichtlippe (15) erstreckt und der einen dem Gleiter (9) zugewandte Befestigungseinrichtung umfasst.

9. Brühvorrichtung (1) nach einem der vorhergehenden Ansprüche, wobei der Gleiter (9) auf seiner der Rückwand (17) zugewandten Seiten einen zentralen Vorsprung (21) aufweist, der in einer korrespondierenden Führung (22) am Kolbengehäuse (14), die zentral an der Rückwand (17) ausgebildet ist, axial verschiebbar gelagert ist.

10. Brühvorrichtung (1) nach einem der vorhergehenden Ansprüche, wobei der Flüssigkeitszulauf (18) über eine Pumpe und/oder einem Thermoelement in Fluidverbindung mit einem Flüssigkeitsreservoir steht.

11. Verfahren zum Betrieb einer Brühvorrichtung (1) nach einem der vorhergehenden Ansprüche, wobei in einem ersten Verfahrensschritt eine Portionskapsel (2) zwischen dem ersten und dem zweiten Brühkammerelement (3, 4) bereitgestellt wird und wobei in einem nachfolgenden zweiten Verfahrensschritt das erste oder zweite Brühkammerelement (3) von der Ladestellung in die Arbeitsstellung bewegt wird und wobei in einem dritten Verfahrensschritt Flüssigkeit in den Druckraum (8) eingeströmt wird, wodurch der Druckanstieg im Druckraum (8) im ersten Teilschritt zunächst ein Verschieben des Gleiters (9) entlang der Zentralachse (12) in Richtung der Brühkammer (10) zur Herbeiführung der Dichtwirkung des Dichtvorrichtung (5) bewirkt und im zweiten Teilschritt beim Erreichen eines vorbestimmten Druckschwellwertes im Druckraum (8) anschließend die Druckentlastungseinrichtung aktiviert, wodurch die Flüssigkeit in die Brühkammer (10) eingespritzt wird.

12. Verfahren nach Anspruch 11, wobei während des dritten Verfahrensschrittes durch den Druck im Druckraum (9) ein freies Ende einer umlaufenden äußeren Dichtlippe (15) des Dichtelements (7) gegen die Innenwandung eines Kolbengehäuses (14) des ersten oder zweiten Brühkammerelements (3, 4) gedrückt wird.

13. Verfahren nach einem der Ansprüche 11 oder 12, wobei während des dritten Verfahrensschrittes durch den Druck im Druckraum (9) die Dichtvorrichtung (5) gegen einen Flansch (23) der Portionskapsel (2) oder gegen das zweite oder erste Brühkammerelement (4, 3) gedrückt wird.

14. Verfahren nach einem der Ansprüche 11 bis 13, wobei während des ersten Teilschrittes der Druckraum (9) gegen einen in die Brühkammer (9) mündenden Flüssigkeitsablauf (19) durch eine umlaufende innere Dichtlippe (15) der Druckentlastungseinrichtung abgedichtet wird.

15. Verfahren nach einem der Ansprüche 11 bis 14, wobei während des zweiten Teilschrittes die umlaufende innere Dichtlippe (15) durch den Druck im Druckraum (9) von einer Rückwand (17) des Kolbengehäuses (14) beabstandet wird, um den Flüssigkeitsablauf (19) in Fluidverbindung mit den Druckraum (9) zu bringen.

## Claims

1. A brewing apparatus (1) for making a beverage from a single serve capsule (2),
wherein the brewing apparatus (1) has a first brewing chamber element (3), a second brewing chamber element (4) and a sealing device (5), wherein the first brewing chamber element (3) is movable along a central axis (12) between a loading position, in which the first and the second brewing chamber element (3, 4) are spaced apart from each other, and a working position, in which the first and the second brewing chamber element (3, 4) are moved toward each other in order to form a substantially closed brewing chamber (10), wherein, in the working position, the sealing device (5) is arranged between the first and the second brewing chamber element (3, 4), wherein the first or second brewing chamber element (3, 4) has a liquid supply device (6) for injecting liquid into a single serve capsule (2) situated in the brewing chamber (10), wherein the liquid supply device (6) has a pressure space (8) which is delimited with respect to the brewing chamber (10) by a slider (9) which is displaceable along the central axis (12), **characterized in that** the slider (9) has the sealing device (5) on a side facing the brewing chamber (10) and a sealing element (7) with an integrated pressure relief device (11) on a side facing the pressure space (8).

2. The brewing apparatus (1) as claimed in claim 1, wherein the sealing element (7) is formed concentrically and rotationally symmetrically with respect to the central axis (12).

3. The brewing apparatus (1) as claimed in either of the preceding claims, wherein the first or second brewing chamber element (3, 4) has a piston housing (14) in which the slider (9) is mounted displaceably along the central axis (12), wherein the sealing element (7) has a dynamic outer seal (13) for sealing the slider (9) in relation to an inner wall of the piston housing (14), said inner wall extending at least in regions parallel to the central axis (12).

4. The brewing apparatus (1) as claimed in claim 3, wherein the dynamic outer seal (13) comprises an encircling outer sealing lip (15), the free end of which is pressed by pressure in the pressure space (8) in the direction of the inner wall of the piston housing (14).

5. The brewing apparatus (1) as claimed in one of the preceding claims, wherein the piston housing (14) has a rear wall (17) which extends at least in regions perpendicular to the central axis (12) and forms a wall of the pressure space (8) opposite the slider (9).

6. The brewing apparatus (1) as claimed in claim 5, wherein the pressure relief device (11) comprises an encircling inner sealing lip (16), the free end of which presses in its starting position against the rear wall (17) and, when a pressure threshold value in the pressure space (8) is exceeded, is pressed into a release position spaced apart from the rear wall (17).

7. The brewing apparatus (1) as claimed in claim 6, wherein the liquid supply device (6) has a liquid inlet (18), which opens into the pressure space (8), and a liquid outlet (19), which opens into the brewing chamber (10), wherein the liquid outlet (19) is fluidically connected to the liquid inlet (18) only when the inner sealing lip (16) is in the release position.

8. The brewing apparatus (1) as claimed in one of the preceding claims, wherein the sealing element (7) on its side facing the rear wall (17) has a connecting region (20) which runs substantially perpendicularly to the central axis (12), extends from the inner sealing lip (16) to the outer sealing lip (15) and comprises a fastening device facing the slider (9).

9. The brewing apparatus (1) as claimed in one of the preceding claims, wherein the slider (9) on its side facing the rear wall (17) has a central projection (21) which is mounted in an axially displaceable manner in a corresponding guide (22) on the piston housing (14), said guide being formed centrally on the rear wall (17).

10. The brewing apparatus (1) as claimed in one of the preceding claims, wherein the liquid inlet (18) is fluidically connected to a liquid reservoir via a pump and/or a thermocouple.

11. A method for operating a brewing apparatus (1) as claimed in one of the preceding claims, wherein, in a first method step, a single serve capsule (2) is provided between the first and the second brewing chamber element (3, 4), and wherein, in a following second method step, the first or second brewing chamber element (3) is moved from the loading position into the working position, and wherein, in a third method step, liquid is made to flow into the pressure space (8), as a result of which the pressure increase in the pressure space (8) firstly, in the first substep, causes the slider (9) to be displaced along the central axis (12) in the direction of the brewing chamber (10) in order to bring about the sealing action of the sealing device (5) and, in the second substep, when a predetermined pressure threshold value in the pressure space (8) is reached, subsequently activates the pressure relief device, as a result of which the liquid is injected into the brewing chamber (10).

12. The method as claimed in claim 11, wherein, during the third method step, the pressure in the pressure space (9) causes a free end of an encircling outer sealing lip (15) of the sealing element (7) to be pressed against the inner wall of a piston housing (14) of the first or second brewing chamber element (3, 4).

13. The method as claimed in either of claims 11 and 12, wherein, during the third method step, the pressure in the pressure space (9) causes the sealing device (5) to be pressed against a flange (23) of the single serve capsule (2) or against the second or first brewing chamber element (4, 3).

14. The method as claimed in one of claims 11 to 13, wherein, during the first substep, the pressure space (9) is sealed toward a liquid outlet (19) opening into the brewing chamber (9) by an encircling inner sealing lip (15) of the pressure relief device.

15. The method as claimed in one of claims 11 to 14, wherein, during the second substep, the encircling inner sealing lip (15) is spaced apart from a rear wall (17) of the piston housing (14) by the pressure in the pressure space (9) in order to bring the liquid outlet (19) into fluidic connection with the pressure space (9).

## Revendications

1. Dispositif d'infusion (1) pour la préparation d'une boisson à partir d'une capsule-dosette (2), le dispositif d'infusion (1) présentant un premier élément de chambre d'infusion (3), un deuxième élément de chambre d'infusion (4) et un dispositif d'étanchéité (5), le premier élément de chambre d'infusion (3) pouvant être déplacé le long d'un axe central (12) entre une position de chargement dans laquelle le premier et le deuxième élément de chambre d'infusion (3, 4) sont espacés l'un de l'autre, et une position de travail dans laquelle le premier et le deuxième élément de chambre d'infusion (3, 4) sont rapprochés l'un de l'autre pour former une chambre d'infusion (10) essentiellement fermée, le dispositif d'étanchéité (5) étant agencé dans la position de travail entre le premier et le deuxième élément de chambre d'infusion (3, 4), le premier ou le deuxième élément de chambre d'infusion (3, 4) présentant un appareil d'amenée de liquide (6) pour injecter du liquide dans une capsule-dosette (2) se trouvant dans la chambre d'infusion (10), l'appareil d'amenée de liquide (6) présentant une chambre de pression (8), qui est délimitée par rapport à la chambre d'infusion (10) par un coulisseau (9) pouvant coulisser le long de l'axe central (12), **caractérisé en ce que** le coulisseau (9) présente, sur un côté tourné vers la chambre d'infusion (10), le dispositif d'étanchéité (5) et, sur un côté tourné vers la chambre de pression (8), un élément d'étanchéité (7) avec un appareil de détente de pression (11) intégré.

2. Dispositif d'infusion (1) selon la revendication 1, dans lequel l'élément d'étanchéité (7) est réalisé sous forme concentrique et symétrique en rotation par rapport à l'axe central (12).

3. Dispositif d'infusion (1) selon l'une quelconque des revendications précédentes, dans lequel le premier ou le deuxième élément de chambre d'infusion (3, 4) présente un boîtier de piston (14) dans lequel le coulisseau (9) est monté de manière à pouvoir coulisser le long de l'axe central (12), l'élément d'étanchéité (7) présentant un joint d'étanchéité extérieur dynamique (13) pour étanchéifier le coulisseau (9) par rapport à une paroi intérieure du boîtier de piston (14) qui s'étend au moins par zones parallèlement à l'axe central (12).

4. Dispositif d'infusion (1) selon la revendication 3, dans lequel le joint d'étanchéité extérieur dynamique (13) comprend une lèvre d'étanchéité extérieure périphérique (15) dont l'extrémité libre est poussée par la pression dans la chambre de pression (8) en direction de la paroi intérieure du boîtier de piston (14).

5. Dispositif d'infusion (1) selon l'une quelconque des revendications précédentes, dans lequel le boîtier de piston (14) présente une paroi arrière (17) qui s'étend au moins par zones perpendiculairement à l'axe central (12), qui forme une paroi de la chambre de pression (8) située à l'opposé du coulisseau (9).

6. Dispositif d'infusion (1) selon la revendication 5, dans lequel l'appareil de détente de pression (11) comprend une lèvre d'étanchéité intérieure périphérique (16) dont l'extrémité libre pousse dans sa position initiale contre la paroi arrière (17) et est poussée dans une position de libération espacée de la paroi arrière (17) lors du dépassement d'une valeur seuil de pression dans la chambre de pression (8).

7. Dispositif d'infusion (1) selon la revendication 6, dans lequel l'appareil d'amenée de liquide (6) présente une entrée de liquide (18) qui débouche dans la chambre de pression (8) et une sortie de liquide (19) qui débouche dans la chambre d'infusion (10), la sortie de liquide (19) étant en communication fluidique avec l'entrée de liquide (18) uniquement lorsque la lèvre d'étanchéité intérieure (16) se trouve dans la position de libération.

8. Dispositif d'infusion (1) selon l'une quelconque des revendications précédentes, dans lequel l'élément d'étanchéité (7) présente, sur son côté tourné vers la paroi arrière (17), une zone de liaison (20) essentiellement perpendiculaire à l'axe central (12), qui s'étend de la lèvre d'étanchéité intérieure (16) à la lèvre d'étanchéité extérieure (15) et qui comprend un appareil de fixation tourné vers le coulisseau (9).

9. Dispositif d'infusion (1) selon l'une quelconque des revendications précédentes, dans lequel le coulisseau (9) présente, sur ses côtés tournés vers la paroi arrière (17), une saillie centrale (21) qui est montée de manière à pouvoir coulisser axialement dans un guidage correspondant (22) sur le boîtier de piston (14), qui est réalisé de manière centrale sur la paroi arrière (17).

10. Dispositif d'infusion (1) selon l'une quelconque des revendications précédentes, dans lequel l'entrée de liquide (18) est en communication fluidique avec un réservoir de liquide par l'intermédiaire d'une pompe et/ou d'un thermocouple.

11. Procédé d'exploitation d'un dispositif d'infusion (1) selon l'une quelconque des revendications précédentes, dans lequel, dans une première étape de procédé, une capsule-dosette (2) est fournie entre le premier et le deuxième élément de chambre d'infusion (3, 4) et dans lequel, dans une deuxième étape de procédé suivante, le premier ou le deuxième élément de chambre d'infusion (3) est déplacé de la position de chargement vers la position de travail et dans lequel, dans une troisième étape de procédé, du liquide est introduit dans la chambre de pression (8), moyennant quoi l'augmentation de pression dans la chambre de pression (8) provoque d'abord, dans la première sous-étape, un coulissement du coulisseau (9) le long de l'axe central (12) en direction de la chambre d'infusion (10) afin d'obtenir l'effet d'étanchéité du dispositif d'étanchéité (5) et, dans la deuxième sous-étape, lorsqu'une valeur seuil de pression prédéterminée est atteinte dans la chambre de pression (8), l'appareil de détente de pression est ensuite activé, moyennant quoi le liquide est injecté dans la chambre d'infusion (10).

12. Procédé selon la revendication 11, dans lequel, pendant la troisième étape de procédé, la pression dans la chambre de pression (9) pousse une extrémité libre d'une lèvre d'étanchéité extérieure périphérique (15) de l'élément d'étanchéité (7) contre la paroi intérieure d'un boîtier de piston (14) du premier ou du deuxième élément de chambre d'infusion (3, 4).

13. Procédé selon l'une quelconque des revendications 11 ou 12, dans lequel, pendant la troisième étape de procédé, la pression dans la chambre de pression (9) pousse le dispositif d'étanchéité (5) contre une bride (23) de la capsule-dosette (2) ou contre le deuxième ou le premier élément de chambre d'infusion (4, 3).

14. Procédé selon l'une quelconque des revendications 11 à 13, dans lequel, pendant la première sous-étape, la chambre de pression (9) est étanchéifiée contre une sortie de liquide (19) débouchant dans la chambre d'infusion (9) par une lèvre d'étanchéité intérieure périphérique (15) de l'appareil de détente de pression.

15. Procédé selon l'une quelconque des revendications 11 à 14, dans lequel, pendant la deuxième sous-étape, la lèvre d'étanchéité intérieure périphérique (15) est espacée d'une paroi arrière (17) du boîtier de piston (14) par la pression dans la chambre de pression (9), afin de mettre la sortie de liquide (19) en communication fluidique avec la chambre de pression (9).
